# DEMANDE DE BREVET EUROPEEN

(11) **EP 0 606 682 A1**
(43) Date de publication de la demande: **20.07.1994**
(21) Numéro de dépôt: 93203713.8
(22) Date de dépôt: 27.12.1993
(51) Int. Cl.: H04Q 11/04, H04L 1/22

(54) **Procédé de secours d'une liaison de réseau de télécommunications**

(30) Priorité: 15.01.1993 FR 9300446
(71) Demandeur: SAT (Société Anonyme de Télécommunications), F-75116 Paris (FR)
(72) Inventeur: Geheniau, Frédérik, F-92500 Rueil-Malmaison (FR); Baudoin, Georges Joseph, F-75011 Paris (FR)
(74) Mandataire: Cabinet Martinet & Lapoux

(57) **Abrégé**

Les critères connus utilisés pour le secours d'une liaison spécialisée (LS) consistent, ou bien en une détection d'absence de porteuse, ou bien en un taux d'erreur dans les données reçues supérieur à un seuil prédéterminé. Il apparaît qu'une rupture (B) de la liaison spécialisée entre deux centres de rattachement (MULDEX) n'est pas détectée par la mise en oeuvre de tels critères. L'invention prévoit qu'en réponse à une durée d'inactivité dans la liaison (LS) supérieure à une première durée prédéterminée détectée par un dispositif de secours (11), ce dernier établisse une communication à travers le réseau de secours (RES2) et commande un dispositif de secours distant (12) pour la transmission de trames de supervision dans la liaison (LS). Les données sont transmises entre équipements terminaux (ETTD1, ETTD2) à travers le réseau de secours (RES2), jusqu'à ce que le dispositif de secours (11) détecte les trames de supervision transmises par le dispositif distant (12).

## Description

La présente invention concerne un procédé de secours d'une liaison d'un réseau de télécommunications. La liaison est typiquement une liaison fixe, dite liaison spécialisée, qui est attribuée entre deux terminaux d'usager par un exploitant de réseau.

Le coût de location d'une telle liaison pour l'usager est forfaitaire et indépendant du trafic supporté par la liaison, c'est-à-dire du taux moyen d'occupation de la liaison par des données de l'usager. Support stratégique et privilégié du transfert de données de l'usager, cette liaison doit être secourue ; les données de l'usager sont alors transmises à travers un réseau secondaire, d'usage courant pour l'usager, tel que le Réseau Téléphonique Commuté (RTC) ou le Réseau Numérique à Intégration de Services (RNIS), lorsqu'une défaillance est détectée dans la liaison. La durée d'utilisation de ce réseau secondaire par l'usager doit être la plus réduite possible pour des raisons de coût. En effet, contrairement à la liaison fixe, le coût d'utilisation du réseau secondaire n'est pas forfaitaire, mais est fonction de la durée de chaque communication supportée par le réseau, et ainsi de taxes de communication.

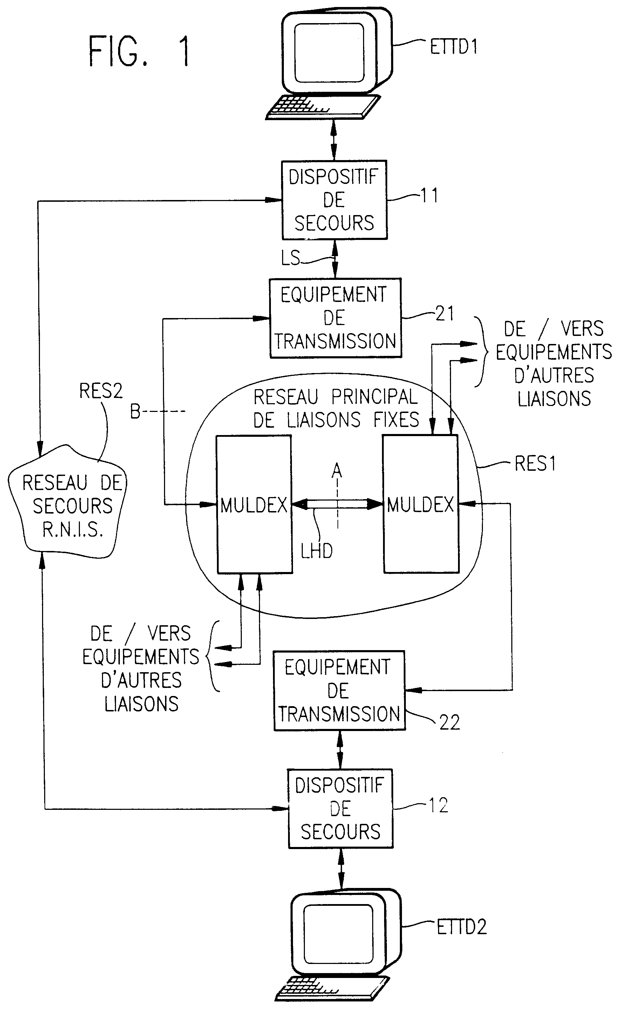

En référence à la figure 1, une chaîne de réseau de télécommunications sécurisant une liaison fixe spécialisée LS selon la technique antérieure est constituée, en outre, de deux équipements terminaux de transmission de données d'usager ETTD1 et ETTD2 disposés aux extrémités de la chaîne.

Chacun des équipements terminaux de transmission de données ETTD1 et ETTD2 est connecté à deux réseaux de télécommunications RES1 et RES2 à travers un dispositif de secours respectif 11, 12. Plus précisément, selon la technique antérieure, le dispositif de secours est intégré à l'équipement terminal de transmission de données, en partie sous forme logicielle. Il est proposé, dans le cadre de la présente invention, de décrire un dispositif de secours dissocié de l'équipement terminal et rattaché physiquement à ce dernier par l'usager. Un premier des deux réseaux de télécommunications, dit réseau principal, RES1 est supposé, à titre d'exemple non limitatif, un réseau de liaisons fixes offrant un service de lignes spécialisées à plusieurs usagers. Ce réseau RES1 est schématiquement représenté par deux multiplexeurs/démultiplexeurs MULDEX dans la figure 1. Ces derniers matérialisent des centres de rattachement auxquels sont rattachés des usagers. Selon les deux directions de transmission, chaque liaison d'usager est multiplexée avec d'autres liaisons d'usager aboutissant au même centre de rattachement qui est relié à un autre centre de rattachement à travers une liaison à haut débit LHD desservant deux zones géographiquement distinctes.

Les dispositifs de secours respectifs 11 et 12 associés aux deux équipements terminaux de transmission de données ETTD1 et ETTD2 sont interconnectés aux deux centres de rattachement respectifs MULDEX, respectivement à travers des équipements de transmission 21 et 22 constituant des interfaces avec le réseau de télécommunications principal RES1. Le deuxième réseau RES2, dit réseau de secours, est supposé être un Réseau Numérique à Intégration de Services (R.N.I.S.).

Chaque équipement terminal de transmission de données est relié à ces deux réseaux RES1 et RES2 à travers un dispositif de secours respectif 11 et 12.

En fonctionnement normal de la chaîne et par rapport à l'une des directions de transmission, par exemple de l'équipement ETTD1 vers l'équipement ETTD2, les données produites par l'équipement terminal ETTD1, sont transmises à travers le réseau principal RES1 qui fournit à l'usager une liaison spécialisée, vers l'autre équipement ETTD2. Lors d'une détection d'un incident dans le réseau principal RES1 par l'un des dispositifs de secours 11 et 12, les données de l'usager sont basculées vers le réseau de secours RES2 pour être transmises à travers ce dernier vers l'équipement ETTD2 afin d'assurer ainsi une continuité dans la transmission des données produites par l'équipement ETTD1.

La demande de brevet européen EP-A-O 454 O36 décrit des procédé et système de retour à une liaison normale après une phase de secours à travers une liaison de secours. Les procédé et dispositif divulgués sont mis en oeuvre lorsque la liaison établie entre deux terminaux est une liaison de secours. Le procédé prévoit, durant la phase de secours, la transmission simultanée de données entre les deux terminaux dans la liaison normale et dans la liaison de secours. Le basculement de la communication entre les deux terminaux de la liaison de secours vers la liaison normale est réalisé lorsqu'une énergie, résultante des données transmises, est reçue dans la ligne de secours par l'un des deux équipements terminaux.

La demande EP-A-O 454 O36 fournit donc des étapes pour détecter une inhibition d'une rupture de la liaison spécialisée, et non une rupture de la liaison spécialisée.

Selon la technique antérieure, deux critères principaux conditionnent le déclenchement du secours de la liaison fixe spécialisée par un réseau de secours, au moyen des dispositifs de secours 11 et 12. Ces critères consistent en :
(1) - une détection d'absence de porteuse entre l'équipement de transmission 21 ou 22 et le centre de rattachement respectif MULDEX. Cette détection est effectuée par l'équipement de transmission 21 ou 22 qui transmet un signal d'absence de porteuse au dispositif de secours 11 ou 12 ; ou bien
(2) - un taux de trames erronées parmi les trames transmises de l'équipement de transmission 21, respectivement 22, vers le dispositif de secours 12, respectivement 11, supérieur à un certain seuil. Typiquement selon la technique antérieure, dans le cas où les données sont transmises par chaque équipement terminal de transmission de données sous forme de trames, ces données sont "réempaquetées" par le dispositif de secours associé à un format de COUCHE liaison, relativement au modèle de référence ISO, de type HDLC. Une séquence de contrôle de trame (FCS) est calculée et incluse dans chaque trame ainsi reformée dans le dispositif de secours 11 associé à l'équipement transmettant et est utilisée par le dispositif de secours associé à l'équipement recevant pour calculer un taux d'erreurs dans les données transmises.

Ces deux critères (1) et (2) permettent de détecter, en référence à la figure 1, respectivement :
(1') - une rupture de la liaison entre l'équipement de transmission 21 et le centre de rattachement respectif MULDEX comme indiqué schématiquement en B ; et
(2') - une dégradation de la qualité de la ligne entre les deux équipements terminaux ETTD1 et ETTD2.

Ainsi une rupture de la liaison entre les deux centres de rattachement MULDEX, telle qu'indiquée schématiquement par le repère A dans la figure 1 n'est pas détectée par le dispositif de secours 11 ou 12 si celui-ci se limite aux deux critères précités de secours d'une liaison. En effet, une telle rupture de la liaison n'implique ni une détection d'absence de la porteuse produite du centre de rattachement respectif MULDEX vers l'équipement de transmission 21 ou 22, ni un taux d'erreur trop élevé dans les données transmises par l'un des équipements terminaux puisque celles-ci ne sont pas reçues par le dispositif de secours distant.

Seule une détection d'inactivité (absence de données et fanions reçus) par le dispositif de secours 11 ou 12, nécessitant des étapes de procédé différentes de celles associées aux critères précités, peut remédier à ce défaut de détection d'incident dans la liaison fixe LS. Il convient de souligner que cette détection d'inactivité peut néanmoins résulter du fait qu'il y a effectivement une rupture de la liaison reliant les deux centres de rattachement MULDEX, ou du fait que l'équipement terminal de transmission de données n'a aucune donnée à transmettre. Ainsi lorsqu'une inactivité est détectée par un dispositif de secours, une indétermination doit être levée entre une rupture de liaison ou un silence durable de l'équipement terminal distant qui ne transmet plus de données.

C'est un objectif de la présente invention de fournir un procédé de secours d'une liaison fixe spécialisée dans lequel une détection d'inactivité de la liaison reliée au dispositif de secours conduit à des étapes de procédé visant à lever l'indétermination résultant de cette détection d'inactivité.

A cette fin, selon l'invention, un procédé de secours d'une première liaison reliant deux équipements terminaux de transmission de données au moyen d'une seconde liaison suppléant à ladite première liaison lorsqu'un défaut est détecté dans cette dernière comprend les étapes suivantes:
1) - établissement d'une communication entre les équipements terminaux à travers ladite seconde liaison et rupture de communication à travers ladite première liaison, après que ledit défaut dans ladite première liaison ait été détecté par l'un des deux équipements terminaux,
2) - transmission de trames de supervision dans ladite première liaison par l'autre des deux équipements terminaux en réponse audit établissement d'une communication à travers ladite seconde liaison, et
3) - rupture de communication à travers ladite seconde liaison et rétablissement de communication à travers ladite première liaison entre lesdits deux équipements terminaux lorsque lesdites trames de supervision transmises par ledit autre des équipements terminaux sont ou bien détectées, ou bien reçues avec un taux d'erreur inférieur à un seuil prédéterminé dans ledit un des deux équipements terminaux,
est caractérisé en ce que ledit défaut détecté par ledit un des deux équipements terminaux est une durée d'inactivité supérieure à une première durée prédéterminée.

Selon une caractéristique avantageuse de l'invention, le procédé de secours selon l'invention est caractérisé en ce que ladite étape 1) est précédée par l'étape préliminaire suivante :
en réponse à une durée d'inactivité supérieure à une seconde durée prédéterminée qui est inférieure à ladite première durée prédéterminée, dans ladite première liaison, détectée dans ledit autre des deux équipements terminaux, une transmission de trames de supervision dans ladite première liaison par ledit autre des deux équipements terminaux.

L'invention prévoit également d'améliorer la sécurisation relativement à l'établissement d'une communication lorsque la seconde liaison est établie à travers un Réseau Numérique à Intégration de service. Dans ce cas, ledit établissement d'une communication entre lesdits équipements terminaux à travers ladite seconde liaison consiste en la transmission d'un message de demande d'établissement de communication dudit un vers ledit autre des deux équipements terminaux, ledit message de demande d'établissement de communication incluant un premier mot codé est comparé avec un premier mot codé préprogrammé dans ledit autre des équipements terminaux, et un message d'acception de connexion est produit par ledit autre desdits équipements terminaux seulement si la comparaison est positive.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1, déjà commentée, montre schématiquement une chaîne de transmission entre deux équipements terminaux de transmission de données selon la technique antérieure;
- la figure 2 montre un bloc-diagramme schématique des éléments constitutifs d'un dispositif de secours pour la mise en oeuvre du procédé selon l'invention;
- les figures 3 et 4 montrent respectivement deux diagrammes d'états relatifs à deux variantes du procédé de secours selon l'invention; et
- les figures 5A et 5B montrent respectivement deux diagrammes temporels d'établissement d'une communication dans un réseau de secours relatifs à deux variantes d'authentification pour la sécurisation de liaison établie lors d'un basculement vers un réseau de secours.

A des fins de simplification, il est supposé dans la suite de la description que seul l'un des deux équipements terminaux ETTD1 et ETTD2 transmet des données qui sont reçues par l'autre des deux équipements terminaux ; en d'autres termes, la description du procédé selon l'invention relativement à l'une des directions de transmission, ETTD1 vers ETTD2, est également applicable à l'autre direction, ETTD2 vers ETTD1. Des mêmes repères 110 à 114 sont utilisés pour désigner des éléments fonctionnels dans les deux dispositifs de secours 11 et 12.

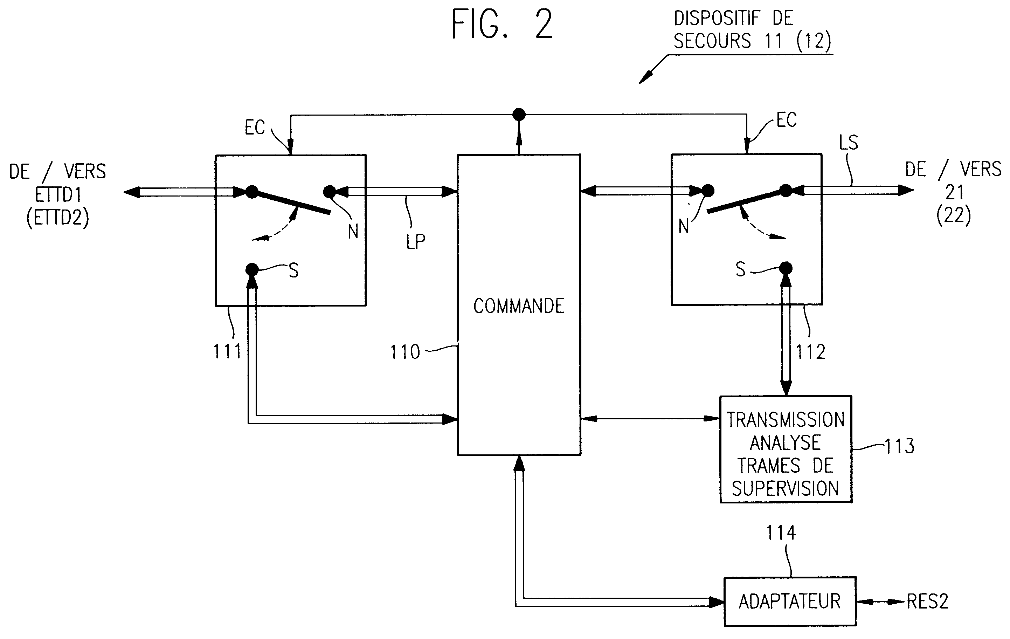

En référence à la figure 2, un dispositif de secours 11, 12 associé à l'équipement ETTD1 ou ETTD2, pour la mise en oeuvre du procédé selon l'invention comprend un organe de commande 110, deux commutateurs électroniques 111 et 112, illustrés schématiquement par des commutateurs électromécaniques, ayant chacun un contact mobile à deux positions N et S, un circuit de transmission et d'analyse de trames de supervision 113 et un adaptateur d'interface 114.

Dans le bloc-diagramme fonctionnel de la figure 2, certains éléments représentés sous forme matérielle peuvent être réalisés sous forme logicielle. Le circuit 113 constitue par exemple une couche logicielle de liaison du modèle de référence OSI, de type HDLC. Les commutateurs électroniques 111 et 112 peuvent être implémentés dans des "moyens logiques de basculement" entre deux programmes logiciels exécutables. L'organe de commande constitue alors un organe central du dispositif de secours organisé autour d'un microprocesseur et assure toutes les fonctions de bas niveau. D'autres réalisations peuvent être choisies pour la mise en oeuvre des dispositifs 11 et 12 dans le cadre des variantes du procédé selon l'invention.

Les deux commutateurs 111 et 112 opèrent tous deux simultanément, ou bien en mode normal N, ou bien en mode secours S. Les contacts mobiles des commutateurs 111 et 112 sont reliés respectivement aux équipements associés ETTD1 et 21, ETTD2 et 22. Lorsque les deux commutateurs 111 et 112 ont leur contact mobile en position N, qui correspond au mode normal de fonctionnement du dispositif 11, 12, également désigné par la lettre N, un port d'entrée/sortie de l'équipement ETTD1, ETTD2 est relié à travers une ligne principale LP incluant en série l'organe de commande 110 disposé entre les deux commutateurs 111 et 112, à un port d'entrée/sortie de l'équipement de transmission 21, 22. La ligne LS reliant les ports d'entrée/sortie des équipements ETTD1 et 21, ETTD2 et 22 est par exemple une interface série possédant des fils attribués aux données et à un signal d'horloge pour chaque direction de transmission. Le circuit de transmission et d'analyse de trames de supervision 113 possède une entrée/sortie qui est reliée au port d'entrée/sortie de l'équipement de transmission 21, 22 lorsque le contact mobile du commutateur 112 est en position S qui correspond au mode de secours de fonctionnement du dispositif 11, 12, également désigné par la lettre S. En fonctionnement normal, à travers la liaison LS et le commutateur 112 en position normale N, l'organe de commande 110 reçoit, d'une part, un signal de détection de porteuse produit par l'équipement de transmission respectif 21, 22 et, d'autre part, des données sous forme de trames HDLC transmises par l'équipement terminal distant ETTD2, ETTD1.

Cet organe de commande 110 applique les critères de secours connus et énoncés précédemment selon la technique antérieure. Ces critères sont fondés d'une part sur un état inactif du signal de détection de porteuse transmis par l'équipement respectif 21, 22, c'est-à-dire une absence de porteuse entre l'équipement de transmission 21, 22, et le centre de rattachement respectif MULDEX, et, d'autre part, sur un taux d'erreur en transmission dans des données transmises par l'équipement terminal distant dans la ligne spécialisée LS supérieur à un seuil prédéterminé.

Selon la technique antérieure, le taux d'erreur en transmission est analysé de la manière suivante. Indépendamment de la nature asynchrone ou synchrone des données transmises par l'équipement terminal, c'est-à-dire que les données soient transmises sous forme de caractères asynchrones ou sous forme de trames élaborées basées sur un protocole de type HDLC, les données sont empaquetées ou "réempaquetées" par l'organe de commande 110 du dispositif de secours 11, respectivement 12, en calculant notamment une séquence de contrôle de trame (FCS) à partir des données constituant la trame initiale. Dans le dispositif de secours distant 12, respectivement 11, l'organe de commande calcule une séquence de contrôle de trame qui est fondée sur la trame reçue. Cette séquence de contrôle de trame calculée est comparée avec la séquence de contrôle de trame lue dans la trame reçue à travers la liaison LS. Des données de cette trame reçue sont erronées si ces deux séquences de contrôle de trame comparées sont différentes.

Selon l'invention, lorsque les communications entre les deux équipements terminaux ETTD1 et ETTD2 sont synchrones, l'organe de commande 110 dans le dispositif 11, respectivement 12 est transparent aux données transmises par l'équipement terminal associé ETTD1, ETTD2, c'est-à-dire les trames produites par l'équipement terminal ne sont pas "réempaquetées" mais transmises telles quelles à travers la liaison spécialisée RS dans le réseau principal RES1. Ainsi, côté du dispositif de secours 12, respectivement 11, recevant des données, un calcul d'une séquence de contrôle de trame est effectué pour chaque trame reçue et cette séquence est comparée avec la séquence de contrôle de trame incluse dans la trame "initiale" produite par l'équipement terminal ETTD1, respectivement ETTD2. Cette caractéristique réduit substantiellement le taux d'occupation de la liaison spécialisée par des données autres que des données utiles.

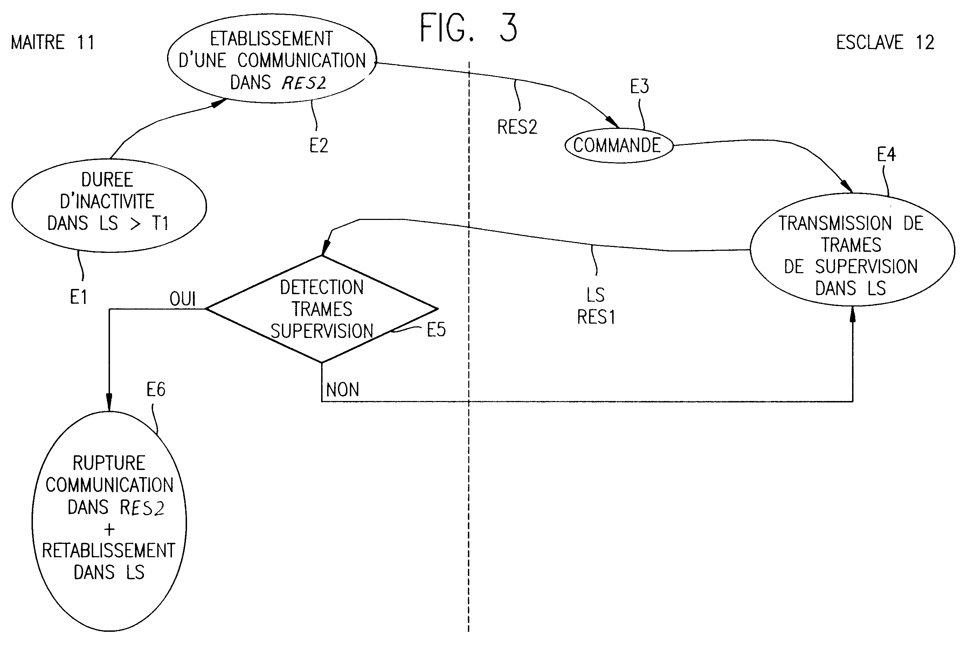

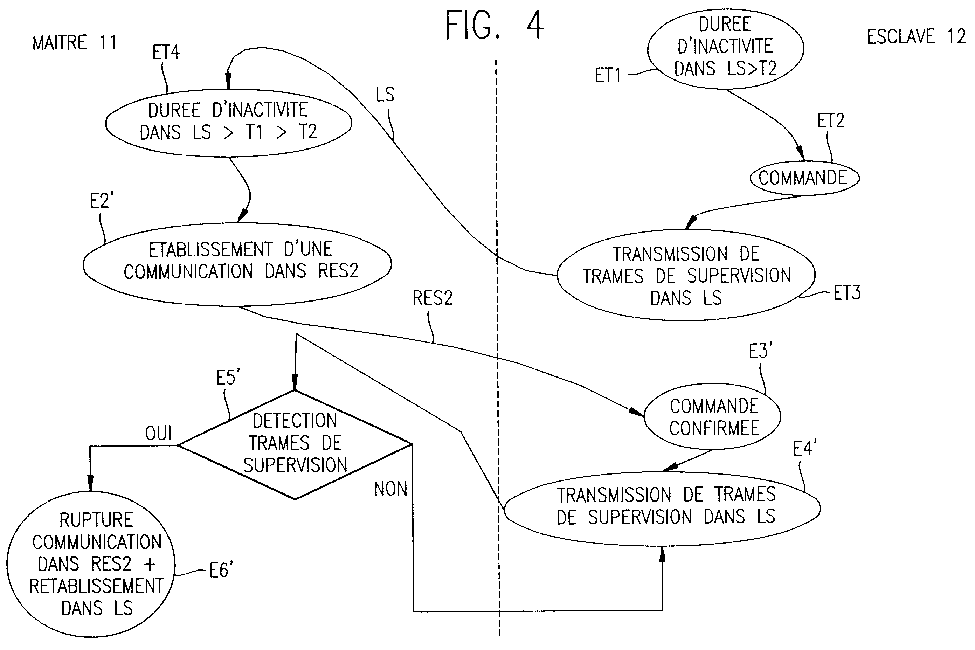

D'autres caractéristiques relatives à une détection d'inactivité dans la ligne spécialisée conformément au procédé selon l'invention seront présentées ultérieurement en référence aux figures 3 et 4.

Lorsque l'un des critères précités est détecté par l'organe de commande 110, celui-ci connecte les deux commutateurs 11 et 12 en mode secours S via des entrées de commande de commutation EC. Les ports d'entrée/sortie des deux équipements terminaux ETTD1 et ETTD2 sont alors reliés au réseau de secours RES2 à travers l'organe de commande 110 et l'adaptateur 114. L'adaptateur 114 est connecté au réseau RES2 qui est par exemple un réseau RNIS ; dans ce cas, l'adapteur 114 est un adaptateur RNIS fournissant une interface, interface S définie par le CCITT, pour l'accès normalisé de l'équipement terminal ETTD1, ETTD2 au réseau de secours RNIS RES2. Les organes de commande 110 dans les dispositifs de secours 11 et 12 sont garants de l'établissement de la communication via le réseau RES2.

Des moyens de détection et de surveillance implantés dans l'organe 11O et le circuit 113 de chacun des dispositifs de secours 11 et 12 appliquent respectivement les critères précités selon la technique antérieure relativement à :
(1) une absence de porteuse; et
(2) au taux d'erreur en transmission supérieur à un seuil prédéterminé,
respectivement afin de détecter une absence de porteuse et de surveiller la qualité de la liaison spécialisée
Après détection d'un défaut dans la liaison, relatif à l'un des deux critères précités, par un premier 11, 12 des dispositifs de secours, ce dernier établit une communication à travers le réseau de secours RES2 avec le second dispositif de secours 12, 11. Une demande d'établissement de communication est transmise à l'adaptateur 114 par l'organe de commande 11O dudit premier dispositif de secours à travers le réseau de secours RES2. Après réception de la demande d'établissement de communication, par l'adaptateur 114 du second dispositif de secours, la communication est établie via le réseau RNIS et l'organe 11O commuté en commutant simultanément les couples de commutateurs respectifs 111 et 112 dans les dispositifs de secours en mode secours S en réponse à des signaux de commande de commutation appliqués aux entrées EC des commutateurs. Les circuits de transmission et d'analyse de trame 112 dans les dispositifs de secours respectifs 11 et 12 constituent alors les extrémités de la liaison spécialisée du réseau principal RES1. La continuité de la transmission des données de l'un des deux équipements ETTD1 et ETTD2 vers l'autre est assurée à travers le réseau de secours RES2.

Dans le cas où le basculement de la transmission des données vers le réseau de secours RES2 résulte de la détection d'une absence de porteuse, la transmission des données à travers le réseau principal RES1 n'est établie que lorsque la porteuse est détectée de nouveau dans la liaison spécialisée LS par l'équipement de transmission 21 ou 22, et qu'un signal de détection de porteuse est transmis au dispositif de secours associé 11 ou 12. Dans le cas où le basculement de la transmission des données vers le réseau de secours RES2 résulte d'un taux d'erreur en transmission dans les données transmises supérieur à un seuil prédéterminé, la transmission des données à travers le réseau principal RES1 n'est rétablie que si le taux d'erreur, relativement à la liaison spécialisée LS, a diminué à nouveau en dessous dudit seuil prédéterminé. Une procédure continue du calcul du taux d'erreur est mise en oeuvre pendant que des données sont échangées entre équipements terminaux ETTD1 et ETTD2 à travers le réseau de secours RES2 au moyen des deux circuits 113. Il est rappelé que, lorsque les commutateurs 112 des deux dispositifs de secours 11 et 12 sont en mode secours S, les deux circuits de transmission et d'analyse de trames de supervision 113 constituent les extrémités de la liaison spécialisée LS du réseau principal RES1.

Deux variantes peuvent être envisagées dans le cadre du calcul de taux d'erreur en transmission et de la détection d'absence de porteuse concernant la ligne spécialisée.

Dans le cadre du calcul du taux d'erreur, selon une première variante, seul l'un des deux dispositifs 11 et 12 est chargé de la surveillance du taux d'erreur en transmission pendant la transmission de données dans la ligne spécialisée. Ce dispositif est appelé "dispositif MAITRE" et a seul l'initiative du basculement de la transmission des données sur le réseau de secours RES2, en produisant une demande d'établissement de communication vers l'autre des deux dispositifs de secours 11 ou 12, appelé "dispositif ESCLAVE", lorsque le taux d'erreur est trop élevé. Le dispositif ESCLAVE, sur réception d'une demande d'établissement de communication, déclenche son circuit de transmission et d'analyse de trames de supervision 113 qui a pour seule fonction, selon cette première variante, de transmettre des trames de supervision dans la ligne spécialisée du réseau principal. Le circuit 113 du dispositif MAITRE a alors uniquement pour fonction d'analyser les trames de supervision produites par le dispositif ESCLAVE dans la ligne spécialisée en mode secours S.

Le dispositif maître est seul apte à décider le rétablissement de la liaison dans le réseau principal RES1 entre équipements terminaux ETTD1 et ETTD2 lorsque l'analyse de trames de supervision transmises par le circuit 113 du dispositif ESCLAVE conduit à un taux d'erreur inférieur au seuil prédéterminé.

Selon une seconde variante, les deux dispositifs de secours 11 et 12 ne sont pas différenciés et chacun des deux dispositifs a l'initiative du basculement sur le réseau de secours RES2, lorsque le taux d'erreur des données transmises dans la liaison spécialisée est supérieur au seuil prédéterminé. Dès que l'un des deux dispositifs de secours 11 et 12 a détecté un défaut de transmission dans la liaison spécialisée, il produit une demande d'établissement de communication vers l'autre dispositif de secours. Le dispositif de secours 11, respectivement 12 ayant détecté un défaut dans la liaison spécialisée bascule "en mode MAITRE" tandis que l'autre dispositif de secours 12, respectivement 11, recevant la demande d'établissement de communication bascule en "mode ESCLAVE". De manière similaire à la première variante, le dispositif en mode ESCLAVE est chargé de la transmission des trames de supervision tandis que le dispositif en mode MAITRE a pour fonction de détecter une amélioration de la qualité de la liaison spécialisée, afin de rétablir cette dernière entre les deux équipements terminaux ETTD1 et ETTD2, alors que ces deux équipements transmettent et reçoivent des données à travers le réseau de secours RES2.

Selon cette seconde variante, un éventuel conflit entre des demandes d'établissement de communication résultant de détections simultanées de défaut de qualité de la liaison spécialisée dans les deux dispositifs de secours 11 et 12 est évité lors de la configuration initiale des deux dispositifs 11 et 12, grâce à des paramétrages dissymétriques des critères de secours, ici par exemple des seuils de taux d'erreur sensiblement différents pour les deux dispositifs 11 et 12, c'est-à-dire pour les deux directions de transmission dans la liaison LS.

De même, pour la détection d'absence de porteuse, des paramétrages dissymétriques des deux dispositifs de secours 11 et 12 permettent de ne pas différencier ces deux dispositifs pour la détection d'une absence de porteuse.

En référence aux figures 3 et 4, il est maintenant présenté deux variantes de secours respectives selon l'invention relatives à une détection d'inactivité dans la liaison spécialisée. Cette inactivité, comme décrit dans le préambule de la description en référence à la figure 1, conduit à une indétermination concernant son origine, à savoir un silence durable d'un équipement terminal, auquel cas aucun secours ne doit être mis en oeuvre, ou une rupture de liaison non détectée, auquel cas un basculement vers le réseau de secours RES2 doit être réalisé.

Dans la description qui suit de ces deux variantes, l'un 11 des deux dispositifs de secours est supposé être en "mode MAITRE" et l'autre en "mode ESCLAVE". Le dispositif MAITRE a l'initiative de la procédure de secours. Néanmoins, comme précisé ultérieurement, les dispositifs de secours 11 et 12 peuvent être assignés dynamiquement aux modes MAITRE et ESCLAVE. Dans ce cas là, les modes respectifs des deux dispositifs sont déterminés lorsque l'un des deux dispositifs 11 et 12 a détecté un évènement particulier dans la liaison spécialisée, ici une inactivité.

La première variante est maintenant décrite en référence à la figure 3. L'un des deux dispositifs de secours, supposé ici être le dispositif 11, est en mode MAITRE tandis que l'autre 12 de ces deux dispositifs est en mode ESCLAVE. Le dispositif MAITRE 11 détecte une durée d'inactivité dans la liaison spécialisée du réseau principal RES1 supérieure à une première durée prédéterminée T1, comme signalé par l'état E1 du diagramme d'états de la figure 3. Cette durée d'inactivité est par exemple signalée au moyen d'un compteur déclenché dès qu'aucune donnée provenant de la liaison spécialisée n'est détectée par l'organe de commande 11O du dispositif MAITRE 11. Ce compteur est incrémenté tant qu'aucune donnée n'est détectée et le contenu de celui-ci est représentatif d'une durée. Dès que la durée d'inactivité dans la liaison spécialisée perçue par le dispositif MAITRE 11 est supérieure à la première durée prédéterminée T1, le dispositif MAITRE 11 transmet une demande d'établissement de communication au dispositif ESCLAVE 12 à travers le réseau de secours RES2 (état E2).

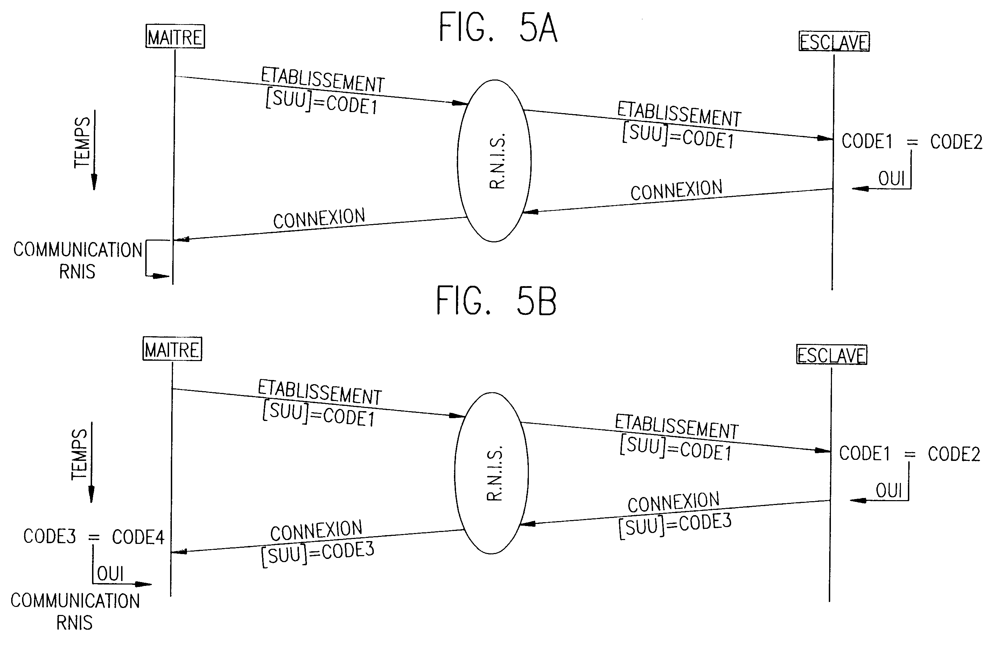

Comme signalé précédemment et comme décrit ultérieurement en référence aux figures 5A et 5B, l'établissement de la communication à travers le réseau de secours RES2 fait l'objet d'une procédure d'authentification de manière à éviter qu'une communication entrante soit acceptée par le dispositif ESCLAVE 12, si cette communication n'est pas relative à un secours de la liaison spécialisée LS dont le dispositif MAITRE 11 a produit la demande d'établissement.

La demande d'établissement de communication est produite par l'organe de commande 11O du dispositif de secours 11 à travers l'adaptateur 114. Dans le dispositif de secours ESCLAVE 12, cette demande d'établissement de communication est détectée par l'organe respectif 11O à travers l'adapteur respectif 114 afin que l'organe respectif 11O commande une transmission de trames de supervision dans la ligne spécialisée LS via le circuit respectif 113. Ainsi, en réponse à cette demande d'établissement, des trames de supervision sont transmises du dispositif ESCLAVE 12 vers le dispositif MAITRE 11 dans la liaison spécialisée LS alors qu'une communication est établie entre les équipements terminaux à travers le réseau de secours RES2. Comme représentés par les états E4, E5 et E6 dans la figure 3, une rupture de la communication entre les deux dispositifs de secours 11 et 12 à travers le réseau de secours RES2 et un rétablissement de la liaison spécialisée sont décidés par le dispositif MAITRE 11, dès lors qu'au moins une trame de supervision, voire plusieurs trames de supervisions successives, est analysée par le circuit d'analyse de trames de supervision 113 du dispositif MAITRE 11, et signale une qualité satisfaisante de la transmission dans la liaison 25.

La figure 4 illustre une seconde variante du procédé de secours selon l'invention par détection d'inactivité dans la liaison spécialisée du réseau principal RES1.

Comme dans la variante précédente, les deux dispositifs de secours 11 et 12 fonctionnent selon des modes respectifs MAITRE et ESCLAVE.

Le dispositif ESCLAVE 12, selon cette variante, détecte une durée d'inactivité, traduisant un défaut de réception de données, supérieure à une seconde durée prédéterminée T2 (état ET1). Si une telle durée d'inactivité est détectée par l'organe de commande 11O dans le dispositif ESCLAVE 11, il est prévu dans ce dernier que l'organe de commande 11O commande (étape ET2) le circuit de transmission de trames de supervision 113 qui produit des trames de supervision dans la liaison spécialisée (état ET3).

Le dispositif MAITRE 11, indépendamment de ces détection d'inactivité et transmission de trames de supervision par le dispositif ESCLAVE 12, détecte une durée d'inactivité dans la liaison spécialisée supérieure à une première durée prédéterminée T1 qui est elle-même supérieure à ladite seconde durée prédéterminée T2 (état ET4) par l'absence de données et/ou de trames de supervision reçues depuis la liaison LS pendant la durée T1.

Suite à cette détection d'une durée d'inactivité supérieure à ladite première durée T1 par le dispositif MAITRE 11, des états E2', E3', E4' et E5', respectivement analogues aux états E2, E3, E4 et E5 selon la variante précédente en référence à la figure 3, décrivent le fonctionnement des dispositifs MAITRE et ESCLAVE 11 et 12. Ainsi, le dispositif MAITRE transmet, en réponse au signalement de durée d'inactivité supérieure à T1, une demande d'établissement de communication au dispositif ESCLAVE 12 à travers le réseau de secours RES2, pour initialiser la transmission des trames de supervision produites par le circuit d'émission de trames 113 du dispositif ESCLAVE 12. Une rupture de la communication de secours et un rétablissement de la liaison spécialisée sont commandés par le dispositif MAITRE 11, dès que ou bien au moins une trame de supervision correcte est détectée par ce dernier, ou bien l'analyse des trames de supervision reçues au moyen du circuit 113 du dispositif de secours MAITRE 11 conduit à un taux d'erreur inférieur au seuil prédéterminé.

Ces deux variantes remédient au problème posé par une rupture de la liaison entre centres de rattachement de la liaison spécialisée, rupture indiquée par le repère A dans la figure 1.

La première variante précitée, en référence à la figure 3, ne nécessite pas la différenciation des dispositifs MAITRE et ESCLAVE. En effet, selon cette première variante, le "mode MAITRE" peut être attribué au premier des deux dispositifs détectant une durée d'inactivité dans la liaison spécialisée supérieure à la première durée T1. Dans ce cas là, la configuration des deux dispositifs de secours est identique et le dispositif ESCLAVE est celui qui reçoit la demande d'établissement de communication à travers le réseau de secours RES2. Afin d'éviter que des détections d'inactivité dans la liaison LS soient simultanés dans les deux dispositifs 11 et 12, conduisant alors à un conflit d'appel dans le réseau de secours RES2, des paramétrages dissymétriques des deux dispositifs sont utilisés, tels que des premières durées T1 différentes, respectivement attribuées aux dispositifs 11 et 12.

En référence aux figures 5A et 5B, il est maintenant décrit une procédure d'authentification selon l'invention correspondant aux étapes E2 et E2' dans les figures 3 et 4. Dans le cadre de la sécurisation d'une liaison spécialisée, il est essentiel que des appels ne perturbent pas et ne prêtent pas à confusion avec un appel d'un dispositif de secours 11, 12 à détecter dans l'autre dispositif 12, 11. En d'autres termes, il est nécessaire que les appels entrants ne soient acceptés par le dispositif de secours ESCLAVE que s'ils sont produits par un dispositif de secours MAITRE relié à une extrémité de la liaison spécialisée.

Dans le cadre du RNIS, il est connu que les messages ETABLISSEMENT et CONNEXION peuvent contenir jusqu'à 32 octets d'information d'usager à usager, utilisables à des fins de mini-messagerie entre usagers ou par exemple pour échanger des mots de passe ou des clefs d'accès avec un serveur. Le protocole D, associé à la signalisation par canal sémaphore dans le RNIS, offre ce service de signalisation d'usager à usager.

Selon une première variante en référence à la figure 5A, lors de la transmission du message de demande d'établissement de communication ETABLISSEMENT par un premier des dispositifs de secours vers l'autre des dispositifs de secours à travers le réseau de secours RES1, ledit premier dispositif transmet dans la signalisation d'usager à usager SUU un mot codé donné CODE1 qu'il mémorise. Le second dispositif recevant le message ETABLISSEMENT lit le mot codé CODE1 qu'il compare avec un code préprogrammé déterminé CODE2. Un message d'acceptation de connexion CONNEXION n'est produit par le second dispositif que si les deux mots CODE1 et CODE2 sont identiques. Inversement, si les deux mots CODE1 et CODE2 sont différents, le second dispositif rejette l'appel en produisant un message de libération de communication. Le premier dispositif de secours n'effectue un passage en secours que si le message CONNEXION lui parvient. Dans le cas où le message CONNEXION n'est pas détecté, le premier dispositif MAITRE réitère sa demande d'établissement de communication, tant que la détection du défaut dans la liaison LS demeure.

Selon une seconde variante plus sécurisante, montrée à la figure 5B, si dans un dispositif de secours ESCLAVE, la comparaison d'un premier mot codé CODE1 inclus dans le message ETABLISSEMENT transmis par un dispositif de secours MAITRE avec un premier mot codé préprogrammé CODE2 est positive, le dispositif ESCLAVE transmet un second mot codé CODE3 dans la signalisation d'usager à usager SUU du message CONNEXION. Ce second mot codé CODE3 est comparé avec un second mot codé préprogrammé CODE4 dans le dispositif MAITRE. Le dispositif MAITRE bascule en mode secours si cette dernière comparaison est positive.

## Revendications

1. Procédé de secours d'une première liaison (RES1) reliant deux équipements terminaux de transmission de données (ETTD1, ETTD2) au moyen d'une seconde liaison (RES2) suppléant à ladite première liaison (RES1) lorsqu'un défaut est détecté dans cette dernière, comprenant les étapes de :
1) - établissement (E2) d'une communication entre les équipements terminaux (ETTD1, ETTD2) à travers ladite seconde liaison (RES2) et rupture de communication à travers ladite première liaison (RES1), après que ledit défaut dans ladite première liaison (RES1) ait été détecté par l'un des deux équipements terminaux (ETTD1, ETTD2),
2) - transmission de trames de supervision (E4) dans ladite première liaison (RES1) par l'autre des deux équipements terminaux en réponse audit établissement d'une communication à travers ladite seconde liaison, et
3) - rupture de communication (E6) à travers ladite seconde liaison (RES2) et rétablissement de communication à travers ladite première liaison (RES1) entre lesdits deux équipements terminaux (ETTD1, ETTD2) lorsque lesdites trames de supervision transmises par ledit autre des équipements terminaux sont ou bien détectées, ou bien reçues avec un taux d'erreur inférieur à un seuil prédéterminé dans ledit un des deux équipements terminaux,
caractérisé en ce que
ledit défaut détecté par ledit un des deux équipements terminaux (ETTD1, ETTD2) est une durée d'inactivité supérieure à une première durée prédéterminée (T1).

2. Procédé de secours conforme à la revendication 1, caractérisé en ce qu'il comprend, en outre, en réponse à une absence de porteuse dans ladite première liaison (RES1) détectée par l'un desdits deux équipements terminaux (ETTD1, ETTD2), un établissement d'une communication entre lesdits équipements terminaux (ETTD1, ETTD2) à travers ladite seconde liaison (RES2) et une rupture de communication entre lesdits deux équipements terminaux (ETTD1, ETTD2) à travers ladite première liaison (RES1), suivi par une rupture de communication à travers ladite seconde liaison (RES2) et par un rétablissement de communication à travers ladite première liaison (RES2) entre lesdits deux équipements terminaux (ETTD1, ETTD2) en réponse à une détection de porteuse.

3. Procédé conforme à la revendication 1 ou 2, caractérisé en ce qu'il comprend, en outre, en réponse à une détection par l'un desdits équipements terminaux d'un taux d'erreur supérieur à un seuil prédéterminé dans des données transmises par l'autre desdits deux équipements terminaux vers ledit un desdits deux équipements, un établissement d'une communication entre lesdits équipements terminaux (ETTD1, ETTD2) à travers ladite seconde liaison (RES2) et une rupture de communication entre lesdits équipements terminaux (ETTD1, ETTD2) à travers ladite première liaison (RES1), suivis des étapes 2) et 3).

4. Procédé conforme à l'une quelconque des revendications 1 à 3, caractérisé en ce que lesdits équipements terminaux (ETTD1, ETTD1) sont indifféremment capables chacun de détecter une durée d'inactivité supérieure à ladite première durée prédéterminée (T1), une absence de porteuse dans ladite première liaison (RES1), et un taux d'erreur supérieur à un seuil prédéterminé dans des données transmises par l'autre équipement terminal, lesdits deux équipements terminaux (ETTD1, ETTD2) étant configurés de manière dissymétrique.

5. Procédé conforme à la revendication 4, caractérisé en ce que des premières durées prédéterminées (T1) et/ou des seuils prédéterminés sont respectivement différents et attribués auxdits équipements terminaux, et en ce que l'étape 1) est effectuée sélectivement par l'un ou l'autre desdits équipements qui détecte le premier une durée d'inactivité supérieure à la première durée prédéterminée respective (T1).

6. Procédé de secours conforme à l'une quelconque des revendications 1 à 3, caractérisé en ce que ladite étape 1) est précédée par l'étape préliminaire suivante :
en réponse à une durée d'inactivité supérieure à une seconde durée prédéterminée (T2) qui est inférieure à ladite première durée prédéterminée (T1), dans ladite première liaison (RES1), détectée dans ledit autre des deux équipements terminaux (ETTD1, ETTD2), une transmission de trames de supervision dans ladite première liaison (RES1) par ledit autre des deux équipements terminaux.

7. Procédé conforme à la revendication 3, selon lequel lesdits équipements terminaux (ETTD1, ETTD2) sont des équipements terminaux synchrones échangeant des données sous forme de trames incluant chacune une séquence de contrôle de trames, caractérisé en ce que ladite détection par l'un desdits équipements terminaux d'un taux d'erreur supérieur à un seuil prédéterminé dans des trames de données transmises par l'autre des équipements terminaux s'effectue par comparaison de séquences de contrôle de trame respectivement calculée par ledit un des deux équipements terminaux et incluse dans chaque trame initialement transmise par ledit autre des équipements terminaux.

8. Procédé conforme à l'une quelconque des revendications 1 à 7, caractérisé en ce que ladite première liaison est une liaison spécialisée, et ladite seconde liaison est établie à travers un Réseau Numérique à Intégration de Services (RNIS).

9. Procédé conforme à la revendication 8, caractérisé en ce que
ledit établissement d'une communication entre lesdits équipements terminaux (ETTD1, ETTD2) à travers ladite seconde liaison (RES2) consiste en la transmission d'un message de demande d'établissement de communication (ETABLISSEMENT) dudit un vers ledit autre des deux équipements terminaux (ETTD1, ETTD2),
ledit message de demande d'établissement de communication (ETABLISSEMENT) incluant un premier mot codé (CODE1) qui est comparé avec un premier mot codé préprogrammé (CODE2) dans ledit autre des équipements terminaux, et
un message d'acception de connexion (CONNEXION) est produit par ledit autre desdits équipements terminaux (ETTD1, ETTD2) seulement si la comparaison est positive.

10. Procédé de secours conforme à la revendication 9, caractérisé en ce que, en réponse à une comparaison positive dudit premier mot codé (CODE1) et dudit premier mot codé préprogrammmé (CODE2) dans ledit autre des équipements terminaux (ETTD1, ETTD2), ledit message d'acception de connexion (CONNEXION) est produit par ledit autre desdits équipements en incluant dans ledit message d'acceptation un second mot codé (CODE3) qui est comparé avec un second mot codé (CODE4) préprogrammé dans ledit un desdits équipements terminaux (ETTD1, ETTD2), l'établissement de la communication à travers ladite seconde liaison (RS2) et la rupture de communication à travers ladite première liaison étant effective seulement si ladite comparaison entre lesdits seconds mots est positive.
